# EUROPEAN PATENT APPLICATION

(11) **EP 4 414 498 A1**
(43) Date of publication of application: **14.08.2024**
(21) Application number: 22878579.6
(22) Date of filing: 06.10.2022
(51) Int. Cl.: D06M 15/53, D06M 13/02, D06M 13/188, D06M 13/224, D06M 13/256, D06M 13/262, D06M 13/292

(54) **FIRST TREATMENT AGENT FOR REGENERATED CELLULOSE FIBER, TREATMENT AGENT FOR REGENERATED CELLULOSE FIBER, COMPOSITION CONTAINING FIRST TREATMENT AGENT FOR REGENERATED CELLULOSE FIBER, METHOD FOR PREPARING DILUTED SOLUTION OF TREATMENT AGENT FOR REGENERATED CELLULOSE FIBER, METHOD FOR TREATMENT OF REGENERATED CELLULOSE FIBER, AND REGENERATED CELLULOSE FIBER**

(30) Priority: 07.10.2021 JP 2021165661
(71) Applicant: Takemoto Yushi Kabushiki Kaisha, Gamagori-shi, Aichi 443-8611 (JP)
(72) Inventor: OHGAI, Takashige, Gamagori-shi, Aichi 443-8611 (JP)
(74) Representative: Handanoglu, Erdal
(86) International application number: PCT/JP2022/037423
(87) International publication number: WO 2023/058711

(57) **Abstract**

The present invention addresses the problem of providing, inter alia, a first treatment agent, for regenerated cellulose fiber, having improved formulation stability. A first treatment agent for regenerated cellulose fiber according to the present invention is used in conjunction with a second treatment agent, for regenerated cellulose fiber, containing a non-ionic surfactant (B2) having an iodine value of 1 gl₂/100 g or more. The first treatment agent for regenerated cellulose fiber contains a sulfate ester salt (A) and a non-ionic surfactant (B1) having an iodine value of less than 1 gl₂/100 g. The sulfate ester salt (A) is a neutralized salt of a reaction product of sulfate and a fat (a), and at least one substance selected from amines, alkali metals, and alkali earth metals.

## Description

### TECHNICAL FIELD

The present invention relates to a first component for treating regenerated cellulose fiber, a regenerated cellulose fiber treatment agent, a first component-containing composition for treating regenerated cellulose fiber, a method of preparing a diluted liquid of a regenerated cellulose fiber treatment agent, a method of treating regenerated cellulose fiber, and a regenerated cellulose fiber.

### BACKGROUND ART

Regenerated cellulose fibers, such as viscose rayon, are known as regenerated fibers made from raw material such as pulp and cotton linters. The regenerated cellulose fibers are attracting attention as alternative fibers for cotton from the viewpoint of excellent biodegradability and excellent hygroscopicity and water absorbability. Generally, regenerated cellulose fibers are produced by first preparing a raw material solution, then wet-spinning this solution, followed by subjecting it to spinning or other processes. For example, a regenerated cellulose fiber treatment agent may be applied to improve processability process passability before the spinning process.

Conventionally, a viscose rayon treatment agent, as disclosed in Patent Document 1, is known. Patent Document 1 discloses a viscose rayon treatment agent that contains either a sulfuric acid ester of oil or fat, such as castor oil, or an amine salt or alkali metal salt thereof as a smoothing agent component.

### CITATIONS LIST

### PATENT LITERATURE

Patent Document 1: Japanese Patent No. 5630932

### SUMMARY OF INVENTION

### TECHNICAL PROBLEM

However, there has been a need to further improve the formulation stability of the regenerated cellulose fiber treatment agent.

### SOLUTION TO PROBLEM

As a result of research to solve the above problem, the inventor of the present application has found that a first component for treating regenerated cellulose fiber, in which a specific nonionic surfactant is contained, is suitable.

In order to solve the above problem and in accordance with an aspect of the present invention, a first component for treating regenerated cellulose fiber is used in combination with a second component for treating regenerated cellulose fiber that contains a nonionic surfactant (B2) having an iodine value of 1 gl₂/100 g or more, and is characterized by containing a sulfate ester salt (A) and a nonionic surfactant (B1) having an iodine value of less than 1 gl₂/100 g. The sulfate ester salt (A) is a neutralized salt of a reactant between an oil or fat (a) and sulfuric acid and at least one selected from the group consisting of amines, alkali metals, and alkaline earth metals.

In the first component for treating regenerated cellulose fiber, the nonionic surfactant (B1) may contain a compound obtained by adding an alkylene oxide having 2 or more and 3 or less carbon atoms to 1 mol of an aliphatic alcohol having 8 or more and 24 or less carbon atoms or a fatty acid having 8 or more and 24 or less carbon atoms in a ratio of 1 mol or more and 20 mol or less in total.

In the first component for treating regenerated cellulose fiber, the oil or fat (a) may be at least one selected from the group consisting of castor oil, sesame oil, tall oil, soybean oil, rapeseed oil, palm oil, lard, beef tallow, and whale oil.

The first component for treating regenerated cellulose fiber may have a mass ratio of the content of the sulfate ester salt (A) to the content of the nonionic surfactant (B1) such that sulfate ester salt (A)/nonionic surfactant (B1) is 50/50 to 99/1.

The first component for treating regenerated cellulose fiber may further contain at least one selected from the group consisting of an anionic surfactant (C) and an oil (D). The anionic surfactant (C) is at least one selected from the group consisting of an alkali metal salt of a sulfuric acid ester of a fatty acid having 8 or more and 24 or less carbon atoms, an alkali metal salt of a sulfuric acid ester of an aliphatic alcohol having 8 or more and 24 or less carbon atoms, an alkali metal salt of a sulfuric acid ester of a product obtained by adding an alkylene oxide having 2 or more and 3 or less carbon atoms to 1 mol of an aliphatic alcohol having 8 or more and 24 or less carbon atoms in a ratio of 1 mol or more and 20 mol or less in total, an alkali metal salt of a phosphoric acid ester of an aliphatic alcohol having 8 or more and 24 or less carbon atoms, an alkali metal salt of an aliphatic sulfonic acid having 8 or more and 24 or less carbon atoms, and an alkali metal salt of a fatty acid having 8 or more and 24 or less fatty series. The oil (D) is at least one selected from the group consisting of hydrocarbon compounds, fats and oils, and ester compounds, all of which are liquid at 70°C.

In the first component for treating regenerated cellulose fiber, the potassium, sodium, calcium, and magnesium ion concentrations detected in the nonvolatile matter of the second component for treating regenerated cellulose fiber by ICP emission spectrometry may be 5000 ppm or less, 1000 ppm or less, 1000 ppm or less, and 1000 ppm or less, respectively.

The first component for treating regenerated cellulose fiber may be applied to regenerated cellulose fiber for short fiber.

In order to solve the above problem and in accordance with another aspect of the present invention, a regenerated cellulose fiber treatment agent is configured as a set including the first component for treating regenerated cellulose fiber and a second component for treating regenerated cellulose fiber that contains a nonionic surfactant (B2) having an iodine value of 1 gl₂/100 g or more.

In order to solve the above problem and in accordance with another aspect of the present invention, a first component-containing composition for treating regenerated cellulose fiber contains the first component for treating regenerated cellulose fiber and a solvent (S). The solvent (S) has a boiling point of 105°C or lower at atmospheric pressure.

In the first component-containing composition for treating regenerated cellulose fiber, the solvent (S) may be water.

The first component-containing composition for treating regenerated cellulose fiber may contain the solvent (S) in a ratio of 10% by mass or more and 50% by mass or less of the total mass of the first component-containing composition for treating regenerated cellulose fiber.

In order to solve the above problem and in accordance with another aspect of the present invention, a method of preparing a diluted liquid of a regenerated cellulose fiber treatment agent includes adding to water either the first component for treating regenerated cellulose fiber or the first component-containing composition for treating regenerated cellulose fiber, along with the second component for treating regenerated cellulose fiber that contains a nonionic surfactant (B2) having an iodine value of 1 gl₂/100 g or more such that the obtained diluted liquid has a nonvolatile content of 0.01% by mass or more and 20% by mass or less.

In the method of preparing a diluted liquid of the regenerated cellulose fiber treatment agent, the mass ratio of the first component for treating regenerated cellulose fiber and the second component for treating regenerated cellulose fiber may be first component for treating regenerated cellulose fiber/second component for treating regenerated cellulose fiber = 40/60 to 90/10.

The method of preparing a diluted liquid of the regenerated cellulose fiber treatment agent may include a first step and a second step. The first step is a step of adding to water either the first component for treating regenerated cellulose fiber or the first component-containing composition for treating regenerated cellulose fiber, along with the second component for treating regenerated cellulose fiber, to prepare a diluted liquid of a regenerated cellulose fiber treatment agent having a nonvolatile content of more than 2% by mass and 20% by mass or less. The second step is a step of adding to additional water the diluted liquid of the regenerated cellulose fiber treatment agent prepared in the first step such that the prepared diluted liquid of a regenerated cellulose fiber treatment agent has a nonvolatile content of 0.01% by mass or more and 2% by mass or less.

In order to solve the above problem and in accordance with another aspect of the present invention, a method of treating regenerated cellulose fiber is characterized by applying, to the regenerated cellulose fiber, a diluted liquid of a regenerated cellulose fiber treatment agent obtained by adding, to water, either the first component for treating regenerated cellulose fiber or the first component-containing composition for treating regenerated cellulose fiber, along with a second component for treating regenerated cellulose fiber that contains a nonionic surfactant (B2) having an iodine value of 1 glz/100 g or more.

In the method of treating regenerated cellulose fiber, the mass ratio of the first component for treating regenerated cellulose fiber and the second component for treating regenerated cellulose fiber may be first component for treating regenerated cellulose fiber/second component for treating regenerated cellulose fiber = 40/60 to 90/10.

In order to solve the above problem and in accordance with another aspect of the present invention, a regenerated cellulose fiber has both the first component for treating regenerated cellulose fiber and a second component for treating regenerated cellulose fiber that contains a nonionic surfactant (B2) having an iodine value of 1 glz/100 g or more adhered thereto.

### ADVANTAGEOUS EFFECTS OF INVENTION

The present invention succeeds in improving the formulation stability of the regenerated cellulose fiber treatment agent.

### DESCRIPTION OF EMBODIMENTS

### <First Embodiment>

A first embodiment embodying the first component for treating regenerated cellulose fiber (hereinafter, also referred to as a "first component") of the present invention will now be described. The first component of the present embodiment contains a specific sulfate ester salt (A) and a nonionic surfactant (B1) having an iodine value of less than 1 gl₂/100 g.

### (Sulfate ester salt (A))

The sulfate ester salt (A) to be used in the first component of the present embodiment is a neutralized salt of a reactant between an oil or fat (a) and sulfuric acid and at least one selected from the group consisting of amines, alkali metals, and alkaline earth metals.

Specific examples of the oil or fat (a) include castor oil, sesame oil, tall oil, soybean oil, rapeseed oil, palm oil, lard, beef tallow, and whale oil. Among them, at least one selected from the group consisting of castor oil, sesame oil, tall oil, palm oil, lard, and beef tallow is preferable from the viewpoint of excellent functionality of the regenerated cellulose fiber treatment agent at the time of use.

Specific examples of the alkali metal forming the neutralized salt include sodium, potassium, and lithium. Examples of the alkaline earth metal forming the neutralized salt include metals corresponding to Group 2 elements such as calcium, magnesium, beryllium, strontium, and barium.

The amine forming the neutralized salt may be any of a primary amine, a secondary amine, and a tertiary amine. Specific examples of the amine include (1) aliphatic amines, such as methylamine, dimethylamine, trimethylamine, ethylamine, diethylamine, triethylamine, N-N-diisopropylethylamine, butylamine, dibutylamine, 2-methylbutylamine, tributylamine, octylamine, and dimethyllaurylamine, (2) aromatic amines or heterocyclic amines, such as aniline, N-methylbenzylamine, pyridine, morpholine, piperazine, and derivatives thereof, (3) alkanolamines, such as monoethanolamine, N-methylethanolamine, diethanolamine, triethanolamine, isopropanolamine, diisopropanolamine, triisopropanolamine, dibutylethanolamine, butyldiethanolamine, octyldiethanolamine, and lauryldiethanolamine, (4) arylamines, such as N-methylbenzylamine, (5) polyoxyalkylene alkylamino ethers, such as polyoxyethylene laurylaminoether and polyoxyethylene sterylamino ether, and (6) ammonia.

Specific examples of the sulfate ester salt (A) include (1) amine salts of sulfuric acid esters of oils and fats selected from the group consisting of castor oil, sesame oil, tall oil, soybean oil, rapeseed oil, palm oil, lard, beef tallow, and whale oil, (2) alkali metal salts of sulfuric acid esters of oils and fats selected from the group consisting of castor oil, sesame oil, tall oil, soybean oil, rapeseed oil, palm oil, lard, beef tallow, and whale oil, and (3) alkaline earth metal salts of sulfuric acid esters of oils and fats selected from the group consisting of castor oil, sesame oil, tall oil, soybean oil, rapeseed oil, palm oil, lard, beef tallow, and whale oil. Among them, a sodium salt or a potassium salt of a sulfuric acid ester of oils and fats selected from the group consisting of castor oil, sesame oil, tall oil, palm oil, lard, and beef tallow is preferable from the viewpoint of excellent functionality of the regenerated cellulose fiber treatment agent at the time of use.

As the sulfate ester salt (A), one kind of sulfate ester salt may be used alone, or two or more kinds of sulfate ester salts may be used in appropriate combination.

The lower limit of the content of the sulfate ester salt (A) in the first component is preferably 20% by mass or more, and more preferably 30% by mass or more. When the content is 20% by mass or more, the functionality such as smoothness of the regenerated cellulose fiber treatment agent can be further improved. The upper limit of the content of the sulfate ester salt (A) is preferably 90% by mass or less, and more preferably 80% by mass or less. When the content is 90% by mass or less, the formulation stability can be further improved. Any combination of the upper and lower limits described above may be used.

### (Nonionic surfactant (B1))

The nonionic surfactant (B1) to be used in the first component of the present embodiment has an iodine value of less than 1 gl₂/100 g. The amount of halogen that reacts with 100 g of the nonionic surfactant is expressed in terms of the number of grams of iodine. The iodine value mainly depends on the number of double bonds present in a measurement substance. When the nonionic surfactant (B1) is a mixture of a plurality of nonionic surfactants, it is represented by the iodine value obtained by measuring the amount of halogen that reacts with 100 g of the mixture. When a plurality of nonionic surfactants whose iodine value has already been determined are mixed, the iodine value may be calculated from the content of each surfactant. For example, when 90 parts by mass of a nonionic surfactant having an iodine value of 1 glz/100 g and 10 parts by mass of a nonionic surfactant having an iodine value of 0 gl₂/100 g are used, the iodine value of the mixture is 0.9 gl₂/100 g.

The nonionic surfactant (B1) has an iodine value of less than 1 gl₂/100 g, or when a plurality of nonionic surfactants are used, the nonionic surfactant (B1) can be appropriately selected from known nonionic surfactants and used as long as the mixture has an iodine value of less than 1 gl₂/100 g.

Examples of the nonionic surfactant (B1) used include a nonionic surfactant having a (poly)oxyalkylene structure obtained by adding an alkylene oxide to an alcohol or a carboxylic acid, an ether ester compound having a (poly)oxyalkylene structure obtained by adding an alkylene oxide to an ester compound of a carboxylic acid and a polyhydric alcohol, a nonionic surfactant having a (poly)oxyalkylene structure obtained by adding an alkylene oxide to an alkylamine as an amine compound, and a partial ester compound of a carboxylic acid and, for example, a polyhydric alcohol having a cyclic structure of 3 or more and 6 or less carbon atoms.

Specific examples of the alcohol used as a raw material of the nonionic surfactant include (1) linear alkyl alcohols, such as methanol, ethanol, propanol, butanol, pentanol, hexanol, octanol, nonanol, decanol, undecanol, dodecanol, tridecanol, tetradecanol, pentadecanol, hexadecanol, heptadecanol, octadecanol, nonadecanol, eicosanol, heneicosanol, docosanol, tricosanol, tetracosanol, pentacosanol, hexacosanol, heptacosanol, octacosanol, nonacosanol, and triacontanol, (2) branched alkyl alcohols, such as isopropanol, isobutanol, isohexanol, 2-ethylhexanol, isononanol, isodecanol, isododecanol, isotridecanol, isotetradecanol, isotriacontanol, isohexadecanol, isoheptadecanol, isooctadecanol, isononadecanol, isoeicosanol, isoheneicosanol, isodocosanol, isotricosanol, isotetracosanol, isopentacosanol, isohexacosanol, isoheptacosanol, isooctacosanol, isononacosanol, and isopentadecanol; (3) linear alkenyl alcohols, such as tetradecenol, hexadecenol, heptadecenol, octadecenol, and nonadecenol; (4) branched alkenyl alcohols, such as isohexadecenol and isooctadecenol; (5) cyclic alkyl alcohols, such as cyclopentanol and cyclohexanol; and (6) aromatic alcohols, such as phenol, nonylphenol, benzyl alcohol, monostyrenated phenol, distyrenated phenol, and tristyrenated phenol.

Specific examples of the carboxylic acid used as a raw material of the nonionic surfactant include (1) linear alkyl carboxylic acids, such as octylic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, heneicosanoic acid, and docosanoic acid; (2) branched alkyl carboxylic acids, such as 2-ethylhexanoic acid, isododecanoic acid, isotridecanoic acid, isotetradecanoic acid, isohexadecanoic acid, and isooctadecanoic acid; (3) linear alkenyl carboxylic acids, such as octadecenoic acid, octadecadienoic acid, and octadecatrienoic acid; (4) aromatic carboxylic acids, such as benzoic acid, and (5) hydroxycarboxylic acids, such as resinoleic acid.

Specific examples of the alkylene oxide used as a raw material for forming the (poly)oxyalkylene structure of the nonionic surfactant include ethylene oxide and propylene oxide. The number of moles of the alkylene oxide added is appropriately set, and is preferably 0.1 mol or more and 60 mol or less, more preferably 1 mol or more and 40 mol or less, and still more preferably 2 mol or more and 30 mol or less. Any combination of the upper and lower limits described above may be used. The number of moles of the alkylene oxide added represents the number of moles of the alkylene oxide with respect to 1 mol of an alcohol or a carboxylic acid in the supplied raw materials. When plural kinds of alkylene oxides are used, the alkylene oxide may be a block adduct or a random adduct.

Specific examples of the polyhydric alcohol used as a raw material of the nonionic surfactant include ethylene glycol, propylene glycol, 1,3-propanediol, 1,2-butanediol, 1,3-butanediol, 1,4-butanediol, 2-methyl-1,2-propanediol, 1,5-pentanediol, 1,6-hexanediol, 2,5-hexanediol, 2-methyl-2,4-pentanediol, 2,3-dimethyl-2,3-butanediol, glycerin, 2-methyl-2-hydroxymethyl-1,3-propanediol, trimethylolpropane, sorbitan, pentaerythritol, and sorbitol.

Specific examples of the alkylamine used as a raw material of the nonionic surfactant include methylamine, ethylamine, butylamine, octylamine, laurylamine, octadecylamine, octadecenylamine, and coconut amine.

Among them, a compound obtained by adding an alkylene oxide having 2 or more and 3 or less carbon atoms to 1 mol of an aliphatic alcohol having 8 or more and 24 or less carbon atoms or a fatty acid having 8 or more and 24 or less carbon atoms in a ratio of 1 mol or more and 20 mol or less in total is preferable from the viewpoint of excellent functionality of the regenerated cellulose fiber treatment agent at the time of use and excellent formulation stability.

Specific examples of the nonionic surfactant (B1) include polyoxyethylene (2 mol: the number of moles of alkylene oxide added (the same applies hereinafter)) lauryl ester (iodine value: 0), polyoxyethylene (5 mol) lauryl ester (iodine value: 0), polyoxyethylene (8 mol) lauryl ester (iodine value: 0), polyoxyethylene (15 mol) lauryl ester (iodine value: 0), polyoxyethylene (2 mol) stearyl ester (iodine value: 0), polyoxyethylene (5 mol) stearyl ester (iodine value: 0), polyoxyethylene (8 mol) stearyl ester (iodine value: 0), polyoxyethylene (10 mol) stearyl ester (iodine value: 0), polyoxyethylene (5 mol) behenyl ester (iodine value: 0), polyoxyethylene (10 mol) behenyl ester (iodine value: 0), polyoxyethylene (10 mol) polyoxypropylene (5 mol) lauryl ester (iodine value: 0), and polyoxyethylene (10 mol) lauryl ether (iodine value: 0).

As the nonionic surfactant (B1), one kind of nonionic surfactant having an iodine value of less than 1 glz/100 g may be used alone, or two or more kinds of nonionic surfactants may be used in appropriate combination so that the iodine value of the mixture is less than 1 gl₂/100 g.

The lower limit of the content of the nonionic surfactant (B1) in the first component is preferably 1% by mass or more, and more preferably 5% by mass or more. When the content is 1% by mass or more, the formulation stability can be further improved. The upper limit of the content of the nonionic surfactant (B1) is preferably 60% by mass or less, and more preferably 55% by mass or less. When the content is 60% by mass or less, the formulation stability can be further improved. Any combination of the upper and lower limits described above may be used.

The first component has a mass ratio of the content of the sulfate ester salt (A) to the content of the nonionic surfactant (B1) such that sulfate ester salt (A)/nonionic surfactant (B1) is preferably 50/50 to 99/1, and more preferably 55/45 to 95/5. By being defined in such a range, the formulation stability can be further improved. Any combination of the upper and lower limits described above may be used.

The first component may further contain at least one selected from the following anionic surfactant (C) and the following oil (D) as a smoothing agent. Even when the smoothing agent is contained, the formulation stability of the first component can be maintained.

### (Anionic surfactant (C))

The anionic surfactant (C) is at least one selected from the group consisting of an alkali metal salt of a sulfuric acid ester of a fatty acid having 8 or more and 24 or less carbon atoms, an alkali metal salt of a sulfuric acid ester of an aliphatic alcohol having 8 or more and 24 or less carbon atoms, an alkali metal salt of a sulfuric acid ester of a product obtained by adding an alkylene oxide having 2 or more and 3 or less carbon atoms to 1 mol of an aliphatic alcohol having 8 or more and 24 or less carbon atoms in a ratio of 1 mol or more and 20 mol or less in total, an alkali metal salt of a phosphoric acid ester of an aliphatic alcohol having 8 or more and 24 or less carbon atoms, an alkali metal salt of an aliphatic sulfonic acid having 8 or more and 24 or less carbon atoms, and an alkali metal salt of a fatty acid having 8 or more and 24 or less fatty series.

Specific examples of the alkali metal forming the alkali metal salt include sodium, potassium, and lithium.

The fatty acid having 8 or more and 24 or less carbon atoms may be a sulfuric acid ester obtained from a fatty acid derived from animal or vegetable oil containing a fatty acid having 8 or more and 24 or less carbon atoms. Specific examples of the alkali metal salt of a sulfuric acid ester of a fatty acid having 8 or more and 24 or less carbon atoms include a sodium salt of a sulfuric acid ester of castor oil fatty acid, a sodium salt of a sulfuric acid ester of sesame oil fatty acid, a sodium salt of a sulfuric acid ester of tall oil fatty acid, a sodium salt of a sulfuric acid ester of soybean oil fatty acid, a sodium salt of a sulfuric acid ester of rapeseed oil fatty acid, a sodium salt of a sulfuric acid ester of palm oil fatty acid, a sodium salt of a sulfuric acid ester of lard fatty acid, a sodium salt of a sulfuric acid ester of beef tallow fatty acid, and a sodium salt of a sulfuric acid ester of whale oil fatty acid.

Specific examples of the alkali metal salt of a sulfuric acid ester of an aliphatic alcohol having 8 or more and 24 or less carbon atoms include a sodium salt of lauryl sulfuric acid ester, a sodium salt of cetyl sulfuric acid ester, a sodium salt of oleyl sulfuric acid ester, and a sodium salt of stearyl sulfuric acid ester.

Specific examples of the alkali metal salt of a sulfuric acid ester of a product obtained by adding an alkylene oxide having 2 or more and 3 or less carbon atoms to 1 mol of an aliphatic alcohol having 8 or more and 24 or less carbon atoms in a ratio of 1 mol or more and 20 mol or less in total include a sodium salt of a sulfuric acid ester of polyoxyethylene (3 mol) lauryl ether, a sodium salt of a sulfuric acid ester of polyoxyethylene (5 mol) lauryl ether, a sodium salt of a sulfuric acid ester of polyoxyethylene (3 mol) polyoxypropylene (3 mol) lauryl ether, a sodium salt of a sulfuric acid ester of polyoxyethylene (3 mol) oleyl ether, a sodium salt of a sulfuric acid ester of polyoxyethylene (5 mol) oleyl ether, and a sodium salt of a polyoxyethylene (3 mol) tallow alcohol sulfuric acid ester.

Specific examples of the alkali metal salt of a phosphoric acid ester of an aliphatic alcohol having 8 or more and 24 or less carbon atoms include a potassium salt of lauryl phosphoric acid ester, a potassium salt of cetyl phosphoric acid ester, a potassium salt of oleyl phosphoric acid ester, and a potassium salt of stearyl phosphoric acid ester.

Specific examples of the alkali metal salt of an aliphatic sulfonic acid having 8 or more and 24 or less carbon atoms include a sodium salt of lauryl sulfonic acid, a sodium salt of myristyl sulfonic acid, a sodium salt of cetyl sulfonic acid, a sodium salt of oleyl sulfonic acid, a sodium salt of stearyl sulfonic acid, a sodium salt of tetradecane sulfonic acid, and a sodium salt of secondary alkyl sulfonic acid (C13 to C15).

Specific examples of the alkali metal salt of a fatty acid having 8 or more and 24 or less fatty series include laurate, oleate, and stearate.

As the anionic surfactant (C), one kind of anionic surfactant may be used alone, or two or more kinds of anionic surfactants may be used in appropriate combination.

### (Oil (D))

The oil (D) to be used in the first component of the present embodiment is at least one selected from the group consisting of hydrocarbon compounds, fats and oils, and ester compounds, all of which are liquid at 70°C.

Specific examples of the hydrocarbon which is liquid at 70°C include mineral oil and paraffin wax. Specific examples of fats and oils that are liquid at 70°C include castor oil, sesame oil, tall oil, lard, and beef tallow. Specific examples of the ester compound which is liquid at 70°C include butyl stearate, octyl stearate, oleyl laurate, isotridecyl stearate, sorbitan monooleate, sorbitan trioleate, and sorbitan monostearate.

As the oil (D), one kind of oil may be used alone, or two or more kinds of oils may be used in appropriate combination.

### (Second component for treating regenerated cellulose fiber (hereinafter, referred to as a "second component"))

The first component is used in combination with a second component that contains a nonionic surfactant (B2) having an iodine value of 1 glz/100 g or more. The first component is configured as a separate component from the second component, for example, during storage or distribution, and is mixed with the second component for use. Hereinafter, the second component will be described.

### (Nonionic surfactant (B2))

The nonionic surfactant (B2) to be used in the second component of the present embodiment has an iodine value of 1 glz/100 g or more. When the nonionic surfactant (B2) is a mixture of a plurality of nonionic surfactants, it is represented by the iodine value obtained by measuring the amount of halogen that reacts with 100 g of the mixture. When a plurality of nonionic surfactants whose iodine value has already been determined are mixed, the iodine value may be calculated from the content of each surfactant.

Specific examples of the nonionic surfactant (B2) can be appropriately selected from those exemplified in the nonionic surfactant (B1) blended in the first component.

Specific examples of the nonionic surfactant (B2) include polyoxyethylene (3 mol) oleyl ester (iodine value: 61), polyoxyethylene (5 mol) oleyl ester (iodine value: 51), polyoxyethylene (10 mol) oleyl ester (iodine value: 35), polyoxyethylene (13 mol) oleyl ester (iodine value: 30), polyoxyethylene (10 mol) polyoxypropylene (5 mol) oleyl ester (iodine value: 25), polyoxyethylene (25 mol) oleyl ester (iodine value: 18), and polyoxyethylene (10 mol) oleyl ether (iodine value: 36).

As the nonionic surfactant (B2), one kind of nonionic surfactant having an iodine value of 1 gl₂/100 g or more may be used alone, or two or more kinds of nonionic surfactants may be used in appropriate combination so that the iodine value of the mixture is 1 glz/100 g or more.

### (Inorganic ion concentration)

The following inorganic ion concentration detected in the nonvolatile matter of the second component by ICP emission spectrometry (inductively coupled plasma emission spectrometry) is preferably in the following range. By being defined in such a numerical range, the formulation stability of the second component can be further improved.

The potassium concentration detected in the nonvolatile matter of the second component is preferably 5000 ppm or less, and more preferably 3000 ppm or less. The sodium concentration detected in the nonvolatile matter of the second component is preferably 1000 ppm or less, and more preferably 500 ppm or less. The calcium concentration detected in the nonvolatile matter of the second component is preferably 1000 ppm or less, and more preferably 700 ppm or less. The magnesium ion concentration detected in the nonvolatile matter of the second component is preferably 1000 ppm or less, and more preferably 500 ppm or less.

A method of measuring each inorganic ion concentration includes adding the second component to distilled water to prepare an aqueous solution having a concentration of 0.01% by mass. The concentrations of potassium, sodium, calcium, and magnesium contained in the 0.01% by mass aqueous solution are measured using an ICP emission spectrometer.

In the present specification, the nonvolatile matter refers to a residue obtained after heattreating a target object at 105°C for 2 hours to sufficiently remove volatile substances, also known as absolute dry matter.

### (First component-containing composition for treating regenerated cellulose fiber (hereinafter, referred to as a "first component-containing composition"))

The first component may be mixed with a solvent to prepare a first component-containing composition, and stored or distributed in the form of the first component-containing composition.

The first component-containing composition contains the first component described above and the following solvent (S). The solvent (S) is a solvent having a boiling point of 105°C or lower at atmospheric pressure. Examples of the solvent (S) include water and an organic solvent. Specific examples of the organic solvent include lower alcohols such as ethanol and propanol, and low polar solvents such as hexane. As the solvent (S), one kind of solvent may be used alone, or two or more kinds of solvents may be used in appropriate combination. Among them, water and a polar solvent such as a lower alcohol are preferable from the viewpoint of forming a mixture obtained by mixing the first component and the second component into an emulsion form, and water is more preferable from the viewpoint of excellent handleability.

The first component-containing composition contains the solvent (S) in a ratio of preferably 10% by mass or more and 50% by mass or less of the total mass of the first component-containing composition. Within such a range, the formulation stability of the first component-containing composition can be further improved.

Effects of the first component of the first embodiment and the first component-containing composition obtained from the first component will be described.
(1-1) The first component of the present embodiment contains the sulfate ester salt (A) and the nonionic surfactant (B1) having an iodine value of less than 1 gl₂/100 g. Therefore, the formulation stability, particularly the storage stability, of the first component and the second component, which form the regenerated cellulose fiber treatment agent, can be improved. Accordingly, the appearance of the first component and the second component can be improved. In addition, it is possible to sufficiently exhibit the function obtained by each ingredient blended in the first and second components.
(1-2) The first component-containing composition contains the first component and the solvent (S). Since the second component is configured as a separate component, the formulation stability of the first component-containing composition can be improved. In addition, since the first component-containing composition contains the solvent (S), its mixing properties can be improved when further diluted with a solvent at the time of use.

### <Second Embodiment>

Next, a second embodiment embodying the regenerated cellulose fiber treatment agent (hereinafter, also referred to as a "treatment agent") of the present invention will be described.

For use, a first component is mixed with a second component to prepare a mixture that serves as a treatment agent. This mixture is then diluted with a solvent as necessary and applied to regenerated cellulose fiber. The first component is configured as a separate component from the second component before use, particularly during storage or distribution. Thus, the treatment agent before use, particularly during storage or distribution, may be configured as a set including the first component and the second component.

The effect of the treatment agent of the second embodiment will be described.

(2-1) In the present embodiment, the treatment agent before use, particularly during storage or distribution, is configured as a set including the first component and the second component. This configuration improves the formulation stability of the treatment agent during storage or distribution. As a result, the functions of each ingredient in the treatment agent can be fully exhibited at the time of use.

### <Third Embodiment>

Next, a third embodiment embodying the method of preparing a diluted liquid of a regenerated cellulose fiber treatment agent according to the present invention (hereinafter, the method is referred to as a "method of preparing a diluted liquid of a treatment agent") will be described.

The method of preparing a diluted liquid according to the present embodiment includes adding to water either the first component or the first component-containing composition described above along with the second component described above such that the obtained diluted liquid has a nonvolatile content of 0.01% by mass or more and 20% by mass or less.

As a method for adding the first component and the second component to water, any known method may be appropriately utilized; however, it is preferable to include the following first step and the following second step. By such a method, when the mixture of the first component and the second component is in the form of an emulsion, the stability of the emulsion can be further improved.

The first step is a step of adding to water either the first component or the first component-containing composition along with the second component to prepare a mother liquor of a diluted liquid of the treatment agent having a nonvolatile content of more than 2% by mass and 20% by mass or less. The order of addition of the first component or the first component-containing composition and the second component to water is not particularly limited, the first component or the first component-containing composition may be added to water first, and then the second component may be added thereto, or the second component may be added to water first, and then the first component or the first component-containing composition may be added thereto. Alternatively, the first component or the first component-containing composition and the second component may be simultaneously added to water. From the viewpoint of improving the stability of the emulsion, it is preferable that the first component or the first component-containing composition is first added to water, and then the second component is added thereto. The temperature of water to be diluted is not particularly limited.

The second step is a step of adding the diluted liquid of the regenerated cellulose fiber treatment agent prepared in the first step to additional water to prepare a diluted liquid of the treatment agent having a nonvolatile content of 0.01% by mass or more and 2% by mass or less.

In the method of preparing a diluted liquid of a treatment agent, the mass ratio of the first component and the second component is preferably first component/second component = 40/60 to 90/10. By defining the mass ratio within such a range, the mixing properties can be improved, and a treatment agent having excellent homogeneity can be obtained. When the first component-containing composition is used as the first component, the mass in terms of the first component before solvent dilution is shown.

The effect of the method of preparing a diluted liquid of a treatment agent according to the above embodiment will be described.
(3-1) The method of preparing a diluted liquid of a treatment agent according to the present embodiment includes adding to water either the first component or the first component-containing composition along with the second component such that the obtained diluted liquid has a nonvolatile content of 0.01% by mass or more and 20% by mass or less. Therefore, when the mixture of the first component or the first component-containing composition and the second component is in the form of an emulsion, the stability of the emulsion can be improved. In addition, by mixing the first component or the first component-containing composition prepared in advance and the second component with water, a diluted liquid of the treatment agent in a fiber imparting form can be prepared, so that the diluted liquid of the treatment agent can be easily prepared as compared with a method of preparing from a reagent at the time of use.
(3-2) In addition, the stability of the emulsion can be further improved when the step of adding to water either the first component or the first component-containing composition along with the second component to prepare a mother liquor of a diluted liquid of the treatment agent having a nonvolatile content of more than 2% by mass and 20% by mass or less is carried out. As a result, uniform adhesion of the ingredients to the fiber can be improved, so that the efficacy of each ingredient can be more effectively exhibited.

### <Fourth Embodiment>

Next, a fourth embodiment embodying the method of treating regenerated cellulose fiber (hereinafter, referred to as a "method of treating fiber") according to the present invention will be described.

In the method of treating fiber according to the present embodiment, a diluted liquid of a treatment agent obtained by adding to water either the first component or first component-containing composition described above along with the second component described above is applied to regenerated cellulose fiber. As the method of preparing a diluted liquid of a treatment agent, the method of preparing the diluted liquid of the treatment agent according to the third embodiment can be adopted.

When the first component and the second component are used in combination, the mixing ratio of the first component and the second component can be arbitrarily changed. Thus, it is easy to prepare a treatment agent or a diluted liquid for always obtaining optimum functionality by finely adjusting the blending ratio even under different manufacturing conditions such as differences in manufacturing facilities or differences in climate such as temperature and humidity. This enables stable fiber production. The mass ratio of the first component and the second component is preferably first component/second component = 40/60 to 90/10. By being defined in such a range, the mixing properties and the operability can be improved. When the first component-containing composition is used as the first component, the mass in terms of the first component before solvent dilution is shown.

The type of regenerated cellulose fiber is not particularly limited, and examples thereof include viscose rayon fibers, rayon fibers, cupra, polynosic rayon, and lyocell fibers.

As an adhesion method, a known method, for example, an immersion method, a spray method, a roller method, a shower method, a dropping/flowing method, or another method can be applied. The adhering step is not particularly limited, and examples thereof include a post-step of a refining step, and a spinning step. In particular, it is preferably used for raw stock for spinning in the post-step of the refining step, that is, before the spinning step. It is preferable that the diluted liquid of the treatment agent is adhered to the regenerated cellulose fiber so as to have a proportion of 0.01 to 1% by mass as a solid content not containing a solvent. By applying the diluted liquid at such a ratio, excellent spinning characteristics can be imparted to regenerated cellulose fibers, particularly rayon fibers.

The application of the fiber is not particularly limited, and examples thereof include short fibers, spun yarns, and nonwoven fabrics. The present invention can be applied to both of short fibers and long fibers, but is preferably applied to short fibers. The short fibers correspond to those generally called staples, and do not include long fibers generally called filaments. The length of the short fiber is not particularly limited as long as the short fiber corresponds to the short fiber in the present technical field, and is preferably, for example, 100 mm or less.

The regenerated cellulose fiber to which the diluted liquid is applied may be dried using a known method. A solvent such as water is volatilized by the drying treatment, and regenerated cellulose fibers to which ingredients contained in the first component and the second component are attached are obtained.

The effect of the method of treating fiber according to the present embodiment will be described.

(4-1) The method of treating fiber according to the present embodiment includes applying a diluted liquid to the regenerated cellulose fiber in, for example, the post-step of the refining step, the spinning step, and another step. In particular, in the case of a diluted liquid prepared by adding to water either the first component or the first component-containing composition along with the second component, a diluted liquid excellent in emulsion stability is obtained. Therefore, the spinning characteristics and the effects of each ingredient on short fibers, spun yarns, nonwoven fabrics, and the like can be effectively exhibited.

The above embodiment may be modified as follows. The above embodiments and the following modification examples can be implemented in combination with each other within a range not technically contradictory.
· In the first component, the second component, the first component-containing composition, or the diluted liquid of the treatment agent of the above embodiments, additional components commonly used in treatment agents, such as other solvents, stabilizers, antistatic agents, binding agents, antioxidants, ultraviolet absorbers, organic acids, and surfactants other than the those mentioned above, can also be incorporated in order to maintain the quality of each agent, composition, or diluted liquid within a range in which the effect of the present invention is not inhibited.

### EXAMPLES

Examples will now be given below to describe the features and effects of the present invention more specifically, but the present invention is not limited to these examples. In the following description of working examples and comparative examples, "parts" means parts by mass, and "%" means % by mass, unless otherwise noted.

### Experimental Part 1 (preparation of first component)

### (First component (1-1))

A first component (1-1) was prepared by the following preparation method using each ingredient shown in Table 1. As shown in Table 1, the first component (1-1) containing 70 parts (%) of a sodium salt of castor oil sulfuric acid aster (A-1) as the sulfate ester salt (A), 5 parts (%) of polyoxyethylene (8 mol) lauryl ester (iodine value: 0) (B-3) and 5 parts (%) of polyoxyethylene (10 mol) behenyl ester (iodine value: 0) (B-10) as the nonionic surfactant (B1), 15 parts (%) of lauryl sulfonate sodium salt (C-7) as the anionic surfactant (C), and 5 parts (%) of mineral oil (D-3) having a kinematic viscosity at 40°C of about 20 mm²/s as the oil (D) was prepared.

### (First components (1-2) to (1-18), (r1-19))

The first components (1-2) to (1-18) and (r1-19) were prepared so as to contain the sulfate ester salt (A), the nonionic surfactant (B1), the anionic surfactant (C), and the oil (D) in the proportions shown in Table 1 in the same manner as the first component (1-1).

The type and content of the sulfate ester salt (A), the type and content of the nonionic surfactant (B1), the type and content of the anionic surfactant (C), and the type and content of the oil (D) are shown in the "sulfate ester salt (A)" column, the "nonionic surfactant (B1)" column, the "anionic surfactant (C)" column, and the "oil (D)" column of Table 1, respectively. The mass ratio between the content of the sulfate ester salt (A) and the content of the nonionic surfactant (B1) is shown in the column of "mass ratio (sulfate ester salt (A)/nonionic surfactant (B1))" in Table 1.

**[Table 1]**

| Type of first component | Sulfate ester salt (A) | | Nonionic surfactant (B1) | | | Anionic surfactant (C) | | Oil (D) | | Mass ratio (sulfate ester salt (A)/nonionic surfactant (B1)) |
|---|---|---|---|---|---|---|---|---|---|---|
| | Type | Content (% by mass) | Type | Content (% by mass) | Iodine value (gI₂/100 g) | Type | Content (% by mass) | Type | Content (% by mass) | |
| 1-1 | A-1 | 70 | B-3 | 5 | 0 | C-7 | 15 | D-3 | 5 | 88/12 |
| | | | B-10 | 5 | | | | | | |
| 1-2 | A-1 | 65 | B-6 | 15 | 0 | C-6 | 5 | D-2 | 15 | 81/19 |
| 1-3 | A-1 | 68 | B-6 | 15 | 0 | C-7 | 1 | D-6 | 4 | 72/28 |
| | | | B-7 | 12 | | | | | | |
| 1-4 | A-2 | 40 | B-4 | 15 | 0 | C-3 | 20 | D-1 | 10 | 57/43 |
| | | | B-11 | 15 | | | | | | |
| 1-5 | A-2 | 65 | B-6 | 14 | 0 | C-1 | 3 | D-2 | 15 | 81/19 |
| | | | | | | C-5 | 3 | | | |
| 1-6 | A-3 | 50 | B-1 | 10 | 0 | C-1 | 10 | D-6 | 10 | 71/29 |
| | | | B-2 | 10 | | C-7 | 10 | | | |
| 1-7 | A-4 | 68 | B-8 | 5 | 0 | C-6 | 10 | D-4 | 7 | 93/7 |
| | | | | | | C-8 | 10 | | | |
| 1-8 | A-5 | 65 | B-6 | 15 | 0 | C-6 | 5 | D-2 | 15 | 81/19 |
| 1-9 | A-5 | 70 | B-3 | 5 | 0 | C-7 | 15 | D-3 | 5 | 88/12 |
| | | | B-10 | 5 | | | | | | |
| 1-10 | A-6 | 68 | B-6 | 15 | 0 | C-7 | 1 | D-6 | 4 | 72/28 |
| | | | B-7 | 12 | | | | | | |
| 1-11 | A-7 | 40 | B-4 | 15 | 0 | C-3 | 20 | D-1 | 9 1 | 57/43 |
| | | | B-9 | 15 | | | | D-7 | | |
| 1-12 | A-8 | 65 | B-6 | 14 | 0 | C-1 | 3 | D-2 | 15 | 81/19 |
| | | | | | | C-5 | 3 | | | |
| 1-13 | A-8 | 65 | B-6 | 15 | 0 | C-6 | 5 | D-2 | 15 | 81/19 |
| 1-14 | A-8 | 68 | B-6 | 15 | 0 | C-7 | 1 | D-6 | 4 | 72/28 |
| | | | B-7 | 12 | | | | | | |
| 1-15 | A-8 | 50 | B-3 | 14 | 0 | C-2 | 10 | D-8 | 1 | 63/37 |
| | | | B-5 | 14 | | C-4 | 10 | | | |
| | | | B-12 | 1 | | | | | | |
| 1-16 | A-9 | 70 | B-6 | 15 | 0 | C-7 | 1 | D-5 | 2 | 72/28 |
| | | | B-7 | 12 | | | | | | |
| 1-17 | A-1 | 30 | B-3 | 30 | 0 | C-6 | 2 | D-6 | 13 | 35/65 |
| | | | B-7 | 25 | | | | | | |
| 1-18 | A-8 | 80 | B-3 | 10 | 0 | | | | | 80/20 |
| | | | B-11 | 10 | | | | | | |
| r1-19 | A-6 | 70 | | | | C-3 | 5 | D-2 | 5 | 100/0 |
| | | | | | | C-7 | 20 | | | |

Details of the sulfate ester salt (A), the nonionic surfactant (B1), the nonionic surfactant (B2) described later, the anionic surfactant (C), and the oil (D) described in Table 1 are as follows.
(Sulfate ester salt (A))
   A-1: sodium salt of castor oil sulfuric acid ester
   A-2: potassium salt of sesame oil sulfuric acid ester
   A-3: potassium salt of tall oil sulfuric acid ester
   A-4: sodium salt of soybean oil sulfuric acid ester
   A-5: potassium salt of rapeseed oil sulfuric acid ester
   A-6: sodium salt of palm oil sulfuric acid ester
   A-7: potassium salt of lard sulfuric acid ester
   A-8: sodium salt of beef tallow sulfuric acid ester
   A-9: diethanolamine salt of sesame oil sulfuric acid ester
(Nonionic surfactant (B1) and nonionic surfactant (B2))
   B-1: polyoxyethylene (2 mol) lauryl ester (iodine value: 0)
   B-2: polyoxyethylene (5 mol) lauryl ester (iodine value: 0)
   B-3: polyoxyethylene (8 mol) lauryl ester (iodine value: 0)
   B-4: polyoxyethylene (15 mol) lauryl ester (iodine value: 0)
   B-5: polyoxyethylene (2 mol) stearyl ester (iodine value: 0)
   B-6: polyoxyethylene (5 mol) stearyl ester (iodine value: 0)
   B-7: polyoxyethylene (8 mol) stearyl ester (iodine value: 0)
   B-8: polyoxyethylene (10 mol) stearyl ester (iodine value: 0)
   B-9: polyoxyethylene (5 mol) behenyl ester (iodine value: 0)
   B-10: polyoxyethylene (10 mol) behenyl ester (iodine value: 0)
   B-11: polyoxyethylene (10 mol) polyoxypropylene (5 mol) lauryl ester (iodine value: 0)
   B-12: polyoxyethylene (10 mol) lauryl ether (iodine value: 0)
   B-13: polyoxyethylene (3 mol) oleyl ester (iodine value: 61)
   B-14: polyoxyethylene (5 mol) oleyl ester (iodine value: 51)
   B-15: polyoxyethylene (10 mol) oleyl ester (iodine value: 35)
   B-16: polyoxyethylene (13 mol) oleyl ester (iodine value: 30)
   B-17: polyoxyethylene (10 mol) polyoxypropylene (5 mol) oleyl ester (iodine value: 25)
   B-18: polyoxyethylene (25 mol) oleyl ester (iodine value: 18)
   B-19: polyoxyethylene (10 mol) oleyl ether (iodine value: 36)
(Anionic surfactant (C))
   C-1: sodium salt of tall oil fatty acid sulfuric acid ester
   C-2: sodium salt of lauryl sulfuric acid ester
   C-3: sodium salt of polyoxyethylene (3 mol) oleyl ether sulfuric acid ester
   C-4: sodium salt of polyoxyethylene (3 mol) lauryl ether sulfuric acid ester
   C-5: sodium salt of polyoxyethylene (3 mol) tallow alcohol sulfuric acid ester
   C-6: potassium salt of lauryl phosphate
   C-7: sodium salt of lauryl sulfonate
   C-8: oleic acid potassium salt
(Oil (D))
   D-1: mineral oil having a kinematic viscosity at 20°C of about 10 mm²/s
   D-2: mineral oil having a kinematic viscosity at 40°C of about 10 mm²/s
   D-3: mineral oil having a kinematic viscosity at 40°C of about 20 mm²/s
   D-4: mineral oil having a kinematic viscosity at 40°C of about 90 mm²/s
   D-5: beef tallow
   D-6: sorbitan monooleate
   D-7: stearyl stearate
   D-8: paraffin wax (melting point: 55°C)

### Experimental Part 2 (preparation of first component-containing composition)

### (First component-containing composition (X1-1))

A first component-containing composition (X1-1) was prepared by the following preparation method using each ingredient shown in Table 2. As shown in Table 2, the first component-containing composition (X1-1) containing 80 parts (%) of the first component (1-1) and 20 parts (%) of water as the solvent (S) was prepared.

### (First component-containing compositions (X1-2) to (X1-18), (rX-19))

The first component-containing compositions (X1-2) to (X1-18) and (rX-19) were prepared so as to contain the first component and the solvent (S) in the proportions shown in Table 2 in the same manner as the first component-containing composition (X1-1). The type and content of the first component and the type and content of the solvent (S) are shown in the "first component" column and the "solvent (S)" column of Table 2, respectively.

**[Table 2]**

| Type of first component-containing composition | First component | | Solvent (S) | | Evaluation |
|---|---|---|---|---|---|
| | Type | Content (% by mass) | Type | Content (% by mass) | Formulation stability |
| X1-1 | 1-1 | 80 | Water | 20 | ○○ |
| X1-2 | 1-2 | 86 | Water | 14 | ○○ |
| X1-3 | 1-3 | 80 | Water | 20 | ○○ |
| X1-4 | 1-4 | 70 | Water | 30 | ○○ |
| X1-5 | 1-5 | 86 | Water | 14 | ○○ |
| X1-6 | 1-6 | 90 | Water | 10 | ○○ |
| X1-7 | 1-7 | 80 | Water | 20 | ○○ |
| X1-8 | 1-8 | 86 | Water | 14 | ○○ |
| X1-9 | 1-9 | 80 | Water | 20 | ○○ |
| X1-10 | 1-10 | 80 | Water | 20 | ○○ |
| X1-11 | 1-11 | 55 | Water | 45 | ○○ |
| X1-12 | 1-12 | 86 | Water | 14 | ○○ |
| X1-13 | 1-13 | 86 | Water | 14 | ○○ |
| X1-14 | 1-14 | 80 | Water | 20 | ○○ |
| X1-15 | 1-15 | 86 | Water | 14 | ○○ |
| X1-16 | 1-16 | 80 | Water | 20 | ○○ |
| X1-17 | 1-17 | 90 | Water | 10 | ○ |
| X1-18 | 1-18 | 86 | Water | 14 | ○ |
| rX1-19 | r1-19 | 80 | Water | 20 | × |

### Experimental Part 3 (preparation of second component)

### (Second component (2-1))

A second component (2-1) was prepared by the following preparation method using each ingredient shown in Table 3. As shown in Table 3, a second component (2-1) containing 100 parts (%) of a nonionic surfactant (B-13) as the nonionic surfactant (B2) was prepared.

### (Second components (2-2) to (2-10))

The second components (2-2) to (2-10) were prepared so as to contain the nonionic surfactant (B2) at the ratio shown in Table 3 in the same manner as the second component (2-1). The type and content of the nonionic surfactant (B2) are shown in the column of "nonionic surfactant (B2)" in Table 3.

The metal ion concentration detected in the nonvolatile matter of the second component is shown in the column of "metal ion concentration detected in the nonvolatile matter of second component" in Table 3. The metal ion concentration detected in the nonvolatile matter was measured by the ICP emission spectrometry described below.

### · ICP emission spectrometry

The second component is added to distilled water to prepare an aqueous solution having a concentration of 0.01% by mass. The concentrations of potassium, sodium, calcium, and magnesium contained in the 0.01% by mass aqueous solution were measured using an ICP emission spectrometer (ICPE-9000 manufactured by Shimadzu Corporation).

**[Table 3]**

| Type of second component | Nonionic surfactant (B2) | | | Metal ion amount (ppm) detected in nonvolatile matter of second component | | | | Evaluation |
|---|---|---|---|---|---|---|---|---|
| | Type | Content (% by mass) | Iodine value (gI₂/100 g) | Potassium | Sodium | Calcium | Magnesium | Formulation stability |
| 2-1 | B-13 | 100 | 61 | 1000 | 50 | 100 | 0 | ○○ |
| 2-2 | B-14 | 100 | 51 | 1000 | 50 | 100 | 50 | ○○ |
| 2-3 | B-15 | 100 | 35 | 1000 | 0 | 100 | 0 | ○○ |
| 2-4 | B-16 | 100 | 30 | 2000 | 0 | 100 | 0 | ○○ |
| 2-5 | B-13 | 30 | 54 | 1000 | 50 | 100 | 35 | ○○ |
| | B-14 | 70 | | | | | | |
| 2-6 | B-13 | 30 | 43 | 1000 | 15 | 100 | 0 | ○○ |
| | B-15 | 70 | | | | | | |
| 2-7 | B-12 | 5 | 38 | 1600 | 15 | 100 | 0 | ○○ |
| | B-13 | 30 | | | | | | |
| | B-16 | 65 | | | | | | |
| 2-8 | B-13 | 30 | 36 | 1500 | 15 | 100 | 0 | ○○ |
| | B-17 | 65 | | | | | | |
| | B-19 | 5 | | | | | | |
| 2-9 | B-16 | 100 | 30 | 2000 | 0 | 100 | 0 | ○○ |
| 2-10 | B-18 | 100 | 18 | 6000 | 300 | 600 | 0 | ○ |

### Experimental Part 4 (preparation 1 of treatment agent)

The first component obtained in Experimental Part 1 and the second component obtained in Experimental Part 3 were mixed in the ratio shown in Table 4 by the method shown below to finally prepare a treatment agent in an emulsion form.

### (Example 1)

First, 95 g of ion-exchanged water is weighed, and stirred with a propeller stirring blade at 500 rpm for 3 minutes in a water bath at 80°C. In a beaker, 2.5 g of the first component 1-1 was added dropwise with a dropper, then 2.5 g of the second component 2-1 was added dropwise with a dropper, and the resulting mixture was stirred for 5 minutes to obtain a diluted liquid of the treatment agent, which was used as a 5% emulsion (nonvolatile content: 5%) of Example 1.

### (Examples 2 to 34)

In Examples 2 to 34, a 5% emulsion as a diluted liquid of the treatment agent was prepared by mixing the first component and the second component at the ratios shown in Table 4 in the same manner as in Example 1.

The type and content of the first component and the type and content of the second component are shown in the "first component" column and the "second component" column of Table 4, respectively. The mass ratio of the first component and the second component is shown in the column of "mass ratio (first component/second component)" in Table 4.

**[Table 4]**

| Division | First component | | Second component | | Mass ratio (first component/second component) | High speed carding step | Drawing step | | | High-speed rotor type open-end spinning step | Vortex air spinning | Ring spinning step |
|---|---|---|---|---|---|---|---|---|---|---|---|---|
| | Type | Content (% by mass) | Type | Content (% by mass) | | Web uniformity | Number of times of roller winding | Scum preventing properties | Coil form | Scum preventing properties | Workability | Roller winding |
| Example 1 | 1-1 | 50 | 2-1 | 50 | 50/50 | ○○ | ○○ | ○○ | ○○ | ○○ | ○○ | ○○ |
| Example 2 | 1-1 | 80 | 2-1 | 20 | 80/20 | ○○ | ○○ | ○○ | ○○ | ○○ | ○○ | ○○ |
| Example 3 | 1-2 | 50 | 2-6 | 50 | 50/50 | ○○ | ○○ | ○○ | ○○ | ○○ | ○○ | ○○ |
| Example 4 | 1-2 | 90 | 2-6 | 10 | 90/10 | ○○ | ○○ | ○○ | ○○ | ○○ | ○○ | ○○ |
| Example 5 | 1-3 | 60 | 2-4 | 40 | 60/40 | ○○ | ○○ | ○○ | ○○ | ○○ | ○○ | ○○ |
| Example 6 | 1-3 | 80 | 2-4 | 20 | 80/20 | ○○ | ○○ | ○○ | ○○ | ○○ | ○○ | ○○ |
| Example 7 | 1-4 | 50 | 2-7 | 50 | 50/50 | ○○ | ○○ | ○○ | ○○ | ○○ | ○○ | ○○ |
| Example 8 | 1-4 | 70 | 2-7 | 30 | 70/30 | ○○ | ○○ | ○○ | ○○ | ○○ | ○○ | ○○ |
| Example 9 | 1-5 | 60 | 2-5 | 40 | 60/40 | ○○ | ○○ | ○○ | ○○ | ○○ | ○○ | ○○ |
| Example 10 | 1-5 | 80 | 2-5 | 20 | 80/20 | ○○ | ○○ | ○○ | ○○ | ○○ | ○○ | ○○ |
| Example 11 | 1-6 | 60 | 2-3 | 40 | 60/40 | ○○ | ○○ | ○○ | ○○ | ○○ | ○○ | ○○ |
| Example 12 | 1-7 | 40 | 2-3 | 60 | 40/60 | ○○ | ○○ | ○○ | ○○ | ○○ | ○○ | ○○ |
| Example 13 | 1-7 | 60 | 2-3 | 40 | 60/40 | ○○ | ○○ | ○○ | ○○ | ○○ | ○○ | ○○ |
| Example 14 | 1-7 | 90 | 2-8 | 10 | 90/10 | ○○ | ○○ | ○○ | ○○ | ○○ | ○○ | ○○ |
| Example 15 | 1-8 | 40 | 2-2 | 60 | 40/60 | ○○ | ○○ | ○○ | ○○ | ○○ | ○○ | ○○ |
| Example 16 | 1-8 | 60 | 2-2 | 40 | 60/40 | ○○ | ○○ | ○○ | ○○ | ○○ | ○○ | ○○ |
| Example 17 | 1-8 | 80 | 2-2 | 20 | 80/20 | ○○ | ○○ | ○○ | ○○ | ○○ | ○○ | ○○ |
| Example 18 | 1-9 | 60 | 2-2 | 40 | 60/40 | ○○ | ○○ | ○○ | ○○ | ○○ | ○○ | ○○ |
| Example 19 | 1-9 | 70 | 2-2 | 30 | 70/30 | ○○ | ○○ | ○○ | ○○ | ○○ | ○○ | ○○ |
| Example 20 | 1-10 | 40 | 2-3 | 60 | 40/60 | ○○ | ○○ | ○○ | ○○ | ○○ | ○○ | ○○ |
| Example 21 | 1-10 | 60 | 2-3 | 40 | 60/40 | ○○ | ○○ | ○○ | ○○ | ○○ | ○○ | ○○ |
| Example 22 | 1-11 | 90 | 2-9 | 10 | 90/10 | ○○ | ○○ | ○○ | ○○ | ○○ | ○○ | ○○ |
| Example 23 | 1-12 | 50 | 2-3 | 50 | 50/50 | ○○ | ○○ | ○○ | ○○ | ○○ | ○○ | ○○ |
| Example 24 | 1-12 | 60 | 2-3 | 40 | 60/40 | ○○ | ○○ | ○○ | ○○ | ○○ | ○○ | ○○ |
| Example 25 | 1-12 | 80 | 2-3 | 20 | 80/20 | ○○ | ○○ | ○○ | ○○ | ○○ | ○○ | ○○ |
| Example 26 | 1-13 | 60 | 2-3 | 40 | 60/40 | ○○ | ○○ | ○○ | ○○ | ○○ | ○○ | ○○ |
| Example 27 | 1-13 | 80 | 20 | 20 | 80/20 | ○○ | ○○ | ○○ | ○○ | ○○ | ○○ | ○○ |
| Example 28 | 1-14 | 40 | 2-3 | 60 | 40/60 | ○○ | ○○ | ○○ | ○○ | ○○ | ○○ | ○○ |
| Example 29 | 1-14 | 60 | 2-3 | 40 | 60/40 | ○○ | ○○ | ○○ | ○○ | ○○ | ○○ | ○○ |
| Example 30 | 1-14 | 70 | 2-3 | 30 | 70/30 | ○○ | ○○ | ○○ | ○○ | ○○ | ○○ | ○○ |
| Example 31 | 1-15 | 40 | 2-7 | 60 | 40/60 | ○○ | ○○ | ○○ | ○○ | ○○ | ○○ | ○○ |
| Example 32 | 1-16 | 50 | 2-1 | 50 | 50/50 | ○○ | ○○ | ○○ | ○○ | ○○ | ○○ | ○○ |
| Example 33 | 1-10 | 20 | 2-3 | 80 | 20/80 | ○ | ○ | ○ | ○○ | ○ | ○○ | ○ |
| Example 34 | 1-1 | 95 | 2-1 | 5 | 95/5 | ○ | ○○ | ○○ | ○ | ○○ | ○○ | ○○ |

### Experimental Part 5 (preparation 2 of treatment agent)

A treatment agent was prepared by mixing the components shown in Table 5 at a predetermined ratio without passing through the step of preparing the first component and the second component.

### (Treatment agent (r3-1))

As shown in Table 5, the treatment agent (r3-1) contained 9 parts (%) of a potassium salt of lard sulfuric acid ester (A-7) as the sulfate ester salt (A), 9 parts (%) of polyoxyethylene (5 mol) stearyl ester (iodine value: 0) (B-6) and 40 parts (%) of polyoxyethylene (10 mol) oleyl ester (iodine value: 35) (B-15) as the nonionic surfactant (B2), 3 parts (%) of a sodium salt of sodium salt of tall oil fatty acid sulfuric acid ester (C-1) and 3 parts (%) of sodium salt of polyoxyethylene (3 mol) tallow alcohol sulfuric acid ester (C-5) as the anionic surfactant (C), and 15 parts (%) of a mineral oil (D-1) having a kinematic viscosity at 20°C of about 10 mm²/s and 21 parts (%) of beef tallow (D-5) as the oil (D) was prepared as a mixture from the beginning.

### (Treatment agents (r3-2) to (r3-4))

The treatment agents (r3-2) to (r3-4) were prepared so as to contain the sulfate ester salt (A), the nonionic surfactant (B2), the anionic surfactant (C), and the oil (D) in the proportions shown in Table 5 in the same manner as the treatment agent (r3-1).

The type and content of the sulfate ester salt (A), the type and content of the nonionic surfactant (B2), the type and content of the anionic surfactant (C), and the type and content of the oil (D) are shown in the "sulfate ester salt (A)" column, the "nonionic surfactant (B2)" column, the "anionic surfactant (C)" column, and the "oil (D)" column of Table 5, respectively. The mass ratio between the content of the sulfate ester salt (A) and the content of the nonionic surfactant (B2) is shown in the column of "mass ratio (sulfate ester salt (A)/nonionic surfactant (B2))" in Table 5.

**[Table 5]**

| Treatment agent prepared as mixture from beginning (type) | Sulfate ester salt (A) | | Nonionic surfactant (B2) | | | Anionic surfactant (C) | | Oil (D) | | Mass ratio (sulfate ester salt (A)/nonionic surfactant (B2)) | Evaluation |
|---|---|---|---|---|---|---|---|---|---|---|---|
| | Type | Content (% by mass) | Type | Content (% by mass) | Iodine value (gI₂/100 g) | Type | Content (% by mass) | Type | Content (% by mass) | | Formulation stability |
| r3-1 | A-7 | 9 | B-6 | 9 | 29 | C-1 | 3 | D-1 | 15 | 50/50 | × |
| | | | B-15 | 40 | | C-5 | 3 | D-5 | 21 | | |
| r3-2 | A-8 | 65 | B-6 | 15 | 4 | C-1 | 2 | D-2 | 15 | 81/19 | × |
| | | | B-13 | 1 | | C-5 | 2 | | | | |
| r3-3 | A-8 | 66 | B-6 | 15 | 1.03 | C-7 | 1 | D-6 | 4 | 70/30 | × |
| | | | B-7 | 13 | | | | | | | |
| | | | B-16 | 1 | | | | | | | |
| r3-4 | A-1 | 60 | B-3 | 20 | 8.13 | | | | | 67/33 | × |
| | | | B-6 | 10 | | | | | | | |
| | | | B-15 | 5 | | | | | | | |
| | | | B-16 | 5 | | | | | | | |

### Experimental Part 6 (adhesion of diluted liquid of treatment agent to viscose rayon fiber)

The diluted liquid of the treatment agent of each example obtained in Experimental Part 4 was further diluted to prepare a 1% emulsion of the treatment agent. Each aqueous emulsion was adhered to viscose rayon fiber having a fineness of 1.3 × 10⁻⁴ g/m (1.2 denier) and a fiber length of 38 mm by spray lubrication so that the adhesion amount (excluding the solvent) was 0.3% by mass, and dried in a hot air dryer at 80°C for 2 hours. Thereafter, the resultant was moistened overnight in an atmosphere of 25°C × 40% RH to obtain a treated viscose rayon to which the treatment agent was adhered. The obtained viscose rayon fiber was evaluated for web uniformity in a high speed carding step, roller winding, scum preventing properties, and coil form in a drawing step, scum preventing properties in a high-speed rotor type open-end spinning step, workability in a vortex air spinning, and roller winding in a ring spinning step.

### Experimental Part 7 (formulation stability)

The formulation stability was evaluated for the first component-containing composition obtained in Experimental Part 2, the second component obtained in Experimental Part 3, and the treatment agent of Experimental Part 5 prepared without passing through the step of preparing the first component and the second component. That is, after preparing the first component-containing composition, the second component, and the treatment agent, they were left for 24 hours in a state where the liquid state was maintained, and then the appearance was visually evaluated according to the following criteria. The results are shown in the "formulation stability" columns of Tables 2, 3, and 5.

### . Criteria for evaluation of formulation stability

○○ (good): case where there is no moisture or separation and it is uniform
○ (acceptable): case where although particles are slightly observed, there is no problem
× (not acceptable): case where appearance moisture and product separation are seriously problematic

### Experimental Part 8 (evaluation of web uniformity in high speed carding step)

Using 10 kg of the treated viscose rayon fiber, the viscose rayon fiber was subjected to flat carding (manufactured by Howa Machinery, Ltd.) under an atmosphere of 30°C × 70% RH, and passed under the condition of spinning speed = 140 m/min. The uniformity of a card web to be spun was evaluated according to the following criteria. The results are shown in the column of "web uniformity" in Table 4.

### · Evaluation criteria for web uniformity

○○ (good): case where there is no unevenness at all and the web is excellent and uniform
○ (acceptable): case where although slight unevenness is observed, there is no problem
× (failure): case where unevenness can be confirmed, which is problematic

### Experimental Part 9 (evaluation of number of times of roller winding, scum preventing properties, and coil form in drawing step)

Using 10 kg of viscose rayon fiber, the viscose rayon fiber was subjected to flat carding (manufactured by Howa Machinery, Ltd.) to obtain a card sliver. The obtained card sliver was subjected to a PDF drawing machine (manufactured by Ishikawa Seisakusho, LTD.) under an atmosphere of 30°C × 70% RH, and repeatedly passed five times under the condition of a spinning speed = 250 m/min. The number of windings on a rubber roller of the PDF drawing machine was evaluated according to the following criteria. In addition, a degree of scum in each portion of the rubber roller, a reducer, and a trumpet and the coil form of the card sliver were visually evaluated according to the following criteria. The respective results are shown in the column of "drawing step" in Table 4.

### · Evaluation criteria for number of winding on rubber roller

○○ (good): 0 to 4 times
○ (acceptable): 5 to 9 times
× (failure): 10 times or more

### · Evaluation criteria for scum preventing properties

○○ (good): case where scum is hardly observed
○ (acceptable): case where scum is slightly observed
× (failure): case where many scums are observed

### · Evaluation criteria of coil Form

○○ (good): case where the coil form is good
○ (acceptable): case where the coil form is acceptable
× (failure): case where the coil form is defective

### Experimental Part 10 (evaluation of scum preventing properties in high-speed rotor type open-end spinning step)

Using 10 kg of the treated viscose rayon fiber, the viscose rayon fiber was subjected to flat carding (manufactured by Howa Machinery, Ltd.) to obtain a card sliver. The obtained card sliver was subjected to a PDF drawing machine (manufactured by Ishikawa Seisakusho, LTD.) to obtain a drawing sliver. Using the obtained drawing sliver, operation was performed at a rotor rotation speed of 130,000 rpm for 1 hour in an atmosphere of 25°C × 65% RH using a high-speed rotor type open-end spinning machine (manufactured by Scharnhorst). Scum deposition in a rotor of the open-end spinning machine was visually evaluated according to the following criteria. The results are shown in the column of "high-speed rotor type open-end spinning step" in Table 4.

### · Evaluation criteria for scum preventing properties

○○ (good): case where scum deposition is hardly observed
○ (acceptable): case where although slight scum deposition is observed, there is no problem
× (failure): case where scum deposition is observed and is problematic

### Experimental Part 11 (evaluation of vortex air spinning workability)

Using 10 kg of the treated viscose rayon fiber, the viscose rayon fiber was subjected to flat carding (manufactured by Howa Machinery, Ltd.) to obtain a card sliver. The obtained card sliver was subjected to a PDF drawing machine to obtain a drawing sliver. The obtained drawing sliver was subjected to a vortex air spinning machine and operated at a spinning speed of 400 m/min for 2 hours to measure the number of times of yarn breakage. The results are shown in the column of "vortex air spinning" in Table 4.

### · Evaluation criteria for vortex air spinning workability

○○ (good): number of times of yarn breakage: 0
○ (acceptable): number of times of yarn breakage: 1 to 3
× (not acceptable): number of times of yarn breakage: 4 or more

### Experimental Part 12 (evaluation of number of times of roller winding in ring spinning step)

Using 10 kg of the treated viscose rayon fiber, the viscose rayon fiber was subjected to flat carding (manufactured by Howa Machinery, Ltd.) to obtain a card sliver. The obtained card sliver was subjected to a PDF drawing machine (manufactured by Ishikawa Seisakusho, LTD.) to obtain a drawing sliver. The obtained drawing sliver was applied to a roving frame (manufactured by TOYOTA INDUSTRIES CORPORATION.) to obtain a crude yarn. The obtained crude yarn was subjected to a ring spinning machine, and the number of winding on the rubber roller when the operation was performed at a spindle rotation speed of 18000 rpm was measured. The results are shown in the column of "ring spinning step" in Table 4.

### · Evaluation criteria for number of winding on rubber roller

○○ (good): 0 to 4 times
○ (acceptable): 5 to 9 times
× (failure): 10 times or more

The first component, the second component, and the first component-containing composition according to the present invention can improve the formulation stability. The fiber to which the treatment agent obtained from the first component or the like is applied can improve the function such as the web uniformity.

### The present disclosure also encompasses the following embodiments aspects.

### (Additional Embodiment 1)

A first component for treating regenerated cellulose fiber, which is used in combination with a second component for treating regenerated cellulose fiber that contains a nonionic surfactant (B2) having an iodine value of 1 gl₂/100 g or more, characterized by being configured as a separate component from the second component for treating regenerated cellulose fiber except the time of use and comprising the following sulfate ester salt (A) and a nonionic surfactant (B1) having an iodine value of less than 1 gl₂/100 g, wherein the first component for treating regenerated cellulose fiber has a mass ratio of the content of the sulfate ester salt (A) to the content of the nonionic surfactant (B1) such that sulfate ester salt (A)/nonionic surfactant (B1) is 50/50 to 99/1.

Sulfate ester salt (A): a neutralized salt of a reactant between an oil or fat (a) and sulfuric acid and at least one selected from the group consisting of amines, alkali metals, and alkaline earth metals.

### (Additional Embodiment 2)

The first component for treating regenerated cellulose fiber according to additional embodiment 1, wherein the nonionic surfactant (B1) contains a compound obtained by adding an alkylene oxide having 2 or more and 3 or less carbon atoms to 1 mol of an aliphatic alcohol having 8 or more and 24 or less carbon atoms or a fatty acid having 8 or more and 24 or less carbon atoms in a ratio of 1 mol or more and 20 mol or less in total.

### (Additional Embodiment 3)

The first component for treating regenerated cellulose fiber according to additional embodiment 1 or 2, wherein the oil or fat (a) is at least one selected from the group consisting of castor oil, sesame oil, tall oil, soybean oil, rapeseed oil, palm oil, lard, beef tallow, and whale oil.

### (Additional Embodiment 4)

The first component for treating regenerated cellulose fiber according to any one of additional embodiments 1 to 3, further comprising at least one selected from the group consisting of the following anionic surfactant (C) and the following oil (D).

Anionic surfactant (C): at least one selected from the group consisting of an alkali metal salt of a sulfuric acid ester of a fatty acid having 8 or more and 24 or less carbon atoms, an alkali metal salt of a sulfuric acid ester of an aliphatic alcohol having 8 or more and 24 or less carbon atoms, an alkali metal salt of a sulfuric acid ester of a product obtained by adding an alkylene oxide having 2 or more and 3 or less carbon atoms to 1 mol of an aliphatic alcohol having 8 or more and 24 or less carbon atoms in a ratio of 1 mol or more and 20 mol or less in total, an alkali metal salt of a phosphoric acid ester of an aliphatic alcohol having 8 or more and 24 or less carbon atoms, an alkali metal salt of an aliphatic sulfonic acid having 8 or more and 24 or less carbon atoms, and an alkali metal salt of a fatty acid having 8 or more and 24 or less fatty series.

Oil (D): at least one selected from the group consisting of hydrocarbon compounds, fats and oils, and ester compounds, all of which are liquid at 70°C.

### (Additional Embodiment 5)

The first component for treating regenerated cellulose fiber according to any one of additional embodiments 1 to 4, wherein the potassium, sodium, calcium, and magnesium ion concentrations detected in the nonvolatile matter of the second component for treating regenerated cellulose fiber by ICP emission spectrometry is 5000 ppm or less, 1000 ppm or less, 1000 ppm or less and 1000 ppm or less, respectively.

### (Additional Embodiment 6)

The first component for treating regenerated cellulose fiber according to any one of additional embodiments 1 to 5, wherein the first component for treating regenerated cellulose fiber is applied to regenerated cellulose fiber for short fiber.

### (Additional Embodiment 7)

A regenerated cellulose fiber treatment agent characterized by being configured as a set including a first component for treating regenerated cellulose fiber and a second component for treating regenerated cellulose fiber that contains a nonionic surfactant (B2) having an iodine value of 1 gl₂/100 g or more, wherein first component for treating regenerated cellulose fiber is used in combination with the second component for treating regenerated cellulose fiber, while being configured as a separate component from the second component for treating regenerated cellulose fiber except the time of use, and the first component for treating regenerated cellulose fiber is as defined in any one of additional embodiments 1 to 6 or contains the following sulfate ester salt (A) and a nonionic surfactant (B1) having an iodine value of less than 1 glz/100 g.

Sulfate ester salt (A): a neutralized salt of a reactant between an oil or fat (a) and sulfuric acid and at least one selected from the group consisting of amines, alkali metals, and alkaline earth metals.

### (Additional Embodiment 8)

A first component-containing composition for treating regenerated cellulose fiber comprising the first component for treating regenerated cellulose fiber according to any one of additional embodiments 1 to 6 and the following solvent (S).

Solvent (S): a solvent having a boiling point of 105°C or lower at atmospheric pressure.

### (Additional Embodiment 9)

The first component-containing composition for treating regenerated cellulose fiber according to additional embodiment 8, wherein the solvent (S) is water.

### (Additional Embodiment 10)

The first component-containing composition for treating regenerated cellulose fiber according to additional embodiment 8 or 9, wherein the first component-containing composition for treating regenerated cellulose fiber contains the solvent (S) in a ratio of 10% by mass or more and 50% by mass or less of the total mass of the first component-containing composition for treating regenerated cellulose fiber.

### (Additional Embodiment 11)

A method of preparing a diluted liquid of a regenerated cellulose fiber treatment agent, the method comprising adding to water any of the following: a first component for treating regenerated cellulose fiber; a first component-containing composition for treating regenerated cellulose fiber that contains the first component for treating regenerated cellulose fiber and the following solvent (S); the first component for treating regenerated cellulose fiber as defined in any one of additional embodiments 1 to 6; or the first component-containing composition for treating regenerated cellulose fiber as defined in any one of additional embodiments 8 to 10, along with a second component for treating regenerated cellulose fiber that contains a nonionic surfactant (B2) having an iodine value of 1 gl₂/100 g or more, to prepare a diluted liquid of a regenerated cellulose fiber treatment agent having a nonvolatile content of 0.01% by mass or more and 20% by mass or less, wherein the first component for treating regenerated cellulose fiber is used in combination with the second component for treating regenerated cellulose fiber, while being configured as a separate component from the second component for treating regenerated cellulose fiber except the time of use, and contains the following sulfate ester salt (A) and a nonionic surfactant (B1) having an iodine value of less than 1 gl₂/100 g.

Sulfate ester salt (A): a neutralized salt of a reactant between an oil or fat (a) and sulfuric acid and at least one selected from the group consisting of amines, alkali metals, and alkaline earth metals.

Solvent (S): a solvent having a boiling point of 105°C or lower at atmospheric pressure.

### (Additional Embodiment 12)

The method of preparing a diluted liquid of a regenerated cellulose fiber treatment agent according to additional embodiment 11, wherein the mass ratio of the first component for treating regenerated cellulose fiber and the second component for treating regenerated cellulose fiber is first component for treating regenerated cellulose fiber/second component for treating regenerated cellulose fiber = 40/60 to 90/10.

### (Additional Embodiment 13)

The method of preparing a diluted liquid of a regenerated cellulose fiber treatment agent according to additional embodiment 11 or 12, the method comprising the following first step and the following second step.

First step: a step of adding to water either the first component for treating regenerated cellulose fiber or the first component-containing composition for treating regenerated cellulose fiber, along with the second component for treating regenerated cellulose fiber, to prepare a diluted liquid of a regenerated cellulose fiber treatment agent having a nonvolatile content of more than 2% by mass and 20% by mass or less.

Second step: a step of adding to additional water the diluted liquid of the regenerated cellulose fiber treatment agent prepared in the first step such that the prepared diluted liquid of a regenerated cellulose fiber treatment agent has a nonvolatile content of 0.01% by mass or more and 2% by mass or less.

### (Additional Embodiment 14)

A method of treating regenerated cellulose fiber, the method comprising applying, to the regenerated cellulose fiber, a diluted liquid of a regenerated cellulose fiber treatment agent obtained by adding to water any of the following: a first component for treating regenerated cellulose fiber; a first component-containing composition for treating regenerated cellulose fiber that contains the first component for treating regenerated cellulose fiber and the following solvent (S); the first component for treating regenerated cellulose fiber as defined in any one of additional embodiments 1 to 6; or the first component-containing composition for treating regenerated cellulose fiber as defined in any one of additional embodiments 8 to 10, along with a second component for treating regenerated cellulose fiber that contains a nonionic surfactant (B2) having an iodine value of 1 gl₂/100 g or more, wherein the first component for treating regenerated cellulose fiber is used in combination with the second component for treating regenerated cellulose fiber, while being configured as a separate component from the second component for treating regenerated cellulose fiber except the time of use, and contains the following sulfate ester salt (A) and a nonionic surfactant (B1) having an iodine value of less than 1 gl₂/100 g.

Sulfate ester salt (A): a neutralized salt of a reactant between an oil or fat (a) and sulfuric acid and at least one selected from the group consisting of amines, alkali metals, and alkaline earth metals.

Solvent (S): a solvent having a boiling point of 105°C or lower at atmospheric pressure.

### (Additional Embodiment 15)

The method of treating regenerated cellulose fiber according to additional embodiment 14, wherein the mass ratio of the first component for treating regenerated cellulose fiber and the second component for treating regenerated cellulose fiber is first component for treating regenerated cellulose fiber/second component for treating regenerated cellulose fiber = 40/60 to 90/10.

### (Additional Embodiment 16)

A method of producing regenerated cellulose fiber, the method comprising adhering, to the regenerated cellulose fiber, a diluted liquid of a regenerated cellulose fiber treatment agent obtained by adding to water any of the following: a first component for treating regenerated cellulose fiber; a first component-containing composition for treating regenerated cellulose fiber that contains the first component for treating regenerated cellulose fiber and the following solvent (S); the first component for treating regenerated cellulose fiber as defined in any one of additional embodiments 1 to 6; or the first component-containing composition for treating regenerated cellulose fiber as defined in any one of additional embodiments 8 to 10, along with a second component for treating regenerated cellulose fiber that contains a nonionic surfactant (B2) having an iodine value of 1 gl₂/100 g or more, wherein the first component for treating regenerated cellulose fiber is used in combination with the second component for treating regenerated cellulose fiber, while being configured as a separate component from the second component for treating regenerated cellulose fiber except the time of use, and contains the following sulfate ester salt (A) and a nonionic surfactant (B1) having an iodine value of less than 1 gl₂/100 g.

Sulfate ester salt (A): a neutralized salt of a reactant between an oil or fat (a) and sulfuric acid and at least one selected from the group consisting of amines, alkali metals, and alkaline earth metals.

Solvent (S): a solvent having a boiling point of 105°C or lower at atmospheric pressure.

## Claims

1. A first component for treating regenerated cellulose fiber used in combination with a second component for treating regenerated cellulose fiber that contains a nonionic surfactant (B2) having an iodine value of 1 glz/100 g or more, the first component for treating regenerated cellulose fiber comprising a sulfate ester salt (A) and a nonionic surfactant (B1) having an iodine value of less than 1 gl₂/100 g, wherein the sulfate ester salt (A) is a neutralized salt of a reactant between an oil or fat (a) and sulfuric acid and at least one selected from the group consisting of amines, alkali metals, and alkaline earth metals.

2. The first component for treating regenerated cellulose fiber according to claim 1, wherein the nonionic surfactant (B1) contains a compound obtained by adding an alkylene oxide having 2 or more and 3 or less carbon atoms to 1 mol of an aliphatic alcohol having 8 or more and 24 or less carbon atoms or a fatty acid having 8 or more and 24 or less carbon atoms in a ratio of 1 mol or more and 20 mol or less in total.

3. The first component for treating regenerated cellulose fiber according to claim 1 or 2, wherein the oil or fat (a) is at least one selected from the group consisting of castor oil, sesame oil, tall oil, soybean oil, rapeseed oil, palm oil, lard, beef tallow, and whale oil.

4. The first component for treating regenerated cellulose fiber according to any one of claims 1 to 3, wherein the first component for treating regenerated cellulose fiber has a mass ratio of the content of the sulfate ester salt (A) to the content of the nonionic surfactant (B1) such that sulfate ester salt (A)/nonionic surfactant (B1) is 50/50 to 99/1.

5. The first component for treating regenerated cellulose fiber according to any one of claims 1 to 4, further comprising at least one selected from the group consisting of an anionic surfactant (C) and an oil (D), wherein
the anionic surfactant (C) is at least one selected from the group consisting of an alkali metal salt of a sulfuric acid ester of a fatty acid having 8 or more and 24 or less carbon atoms, an alkali metal salt of a sulfuric acid ester of an aliphatic alcohol having 8 or more and 24 or less carbon atoms, an alkali metal salt of a sulfuric acid ester of a product obtained by adding an alkylene oxide having 2 or more and 3 or less carbon atoms to 1 mol of an aliphatic alcohol having 8 or more and 24 or less carbon atoms in a ratio of 1 mol or more and 20 mol or less in total, an alkali metal salt of a phosphoric acid ester of an aliphatic alcohol having 8 or more and 24 or less carbon atoms, an alkali metal salt of an aliphatic sulfonic acid having 8 or more and 24 or less carbon atoms, and an alkali metal salt of a fatty acid having 8 or more and 24 or less fatty series, and
the oil (D) is at least one selected from the group consisting of hydrocarbon compounds, fats and oils, and ester compounds, all of which are liquid at 70°C.

6. The first component for treating regenerated cellulose fiber according to any one of claims 1 to 5, wherein the potassium, sodium, calcium, and magnesium ion concentrations detected in the nonvolatile matter of the second component for treating regenerated cellulose fiber by ICP emission spectrometry is 5000 ppm or less, 1000 ppm or less, 1000 ppm or less, and 1000 ppm or less, respectively.

7. The first component for treating regenerated cellulose fiber according to any one of claims 1 to 6, wherein the first component for treating regenerated cellulose fiber is applied to regenerated cellulose fiber for short fiber.

8. A regenerated cellulose fiber treatment agent being configured as a set including the first component for treating regenerated cellulose fiber according to any one of claims 1 to 7 and a second component for treating regenerated cellulose fiber that contains a nonionic surfactant (B2) having an iodine value of 1 glz/100 g or more.

9. A first component-containing composition for treating regenerated cellulose fiber comprising the first component for treating regenerated cellulose fiber according to any one of claims 1 to 7 and a solvent (S), and the solvent (S) having a boiling point of 105°C or lower at atmospheric pressure.

10. The first component-containing composition for treating regenerated cellulose fiber according to claim 9, wherein the solvent (S) is water.

11. The first component-containing composition for treating regenerated cellulose fiber according to claim 9 or 10, wherein the first component-containing composition for treating regenerated cellulose fiber contains the solvent (S) in a ratio of 10% by mass or more and 50% by mass or less of the total mass of the first component-containing composition for treating regenerated cellulose fiber.

12. A method of preparing a diluted liquid of a regenerated cellulose fiber treatment agent, the method comprising adding to water either the first component for treating regenerated cellulose fiber according to any one of claims 1 to 7 or the first component-containing composition for treating regenerated cellulose fiber according to any one of claims 9 to 11, along with the second component for treating regenerated cellulose fiber that contains a nonionic surfactant (B2) having an iodine value of 1 gl₂/100 g or more such that the obtained diluted liquid has a nonvolatile content of 0.01% by mass or more and 20% by mass or less.

13. The method of preparing a diluted liquid of a regenerated cellulose fiber treatment agent according to claim 12, wherein the mass ratio of the first component for treating regenerated cellulose fiber and the second component for treating regenerated cellulose fiber is first component for treating regenerated cellulose fiber/second component for treating regenerated cellulose fiber = 40/60 to 90/10.

14. The method of preparing a diluted liquid of a regenerated cellulose fiber treatment agent according to claim 12 or 13, the method comprising a first step and a second step,
the first step is a step of adding to water either the first component for treating regenerated cellulose fiber or the first component-containing composition for treating regenerated cellulose fiber, along with the second component for treating regenerated cellulose fiber, to prepare a diluted liquid of a regenerated cellulose fiber treatment agent having a nonvolatile content of more than 2% by mass and 20% by mass or less, and
the second step is a step of adding to additional water the diluted liquid of the regenerated cellulose fiber treatment agent prepared in the first step such that the prepared diluted liquid of a regenerated cellulose fiber treatment agent has a nonvolatile content of 0.01% by mass or more and 2% by mass or less.

15. A method of treating regenerated cellulose fiber, the method comprising applying, to the regenerated cellulose fiber, a diluted liquid of a regenerated cellulose fiber treatment agent obtained by adding to water either the first component for treating regenerated cellulose fiber according to any one of claims 1 to 7 or the first component-containing composition for treating regenerated cellulose fiber according to any one of claims 9 to 11, along with a second component for treating regenerated cellulose fiber that contains a nonionic surfactant (B2) having an iodine value of 1 gl₂/100 g or more.

16. The method of treating regenerated cellulose fiber according to claim 15, wherein the mass ratio of the first component for treating regenerated cellulose fiber and the second component for treating regenerated cellulose fiber is first component for treating regenerated cellulose fiber/second component for treating regenerated cellulose fiber = 40/60 to 90/10.

17. A regenerated cellulose fiber to which both the first component for treating regenerated cellulose fiber according to any one of claims 1 to 7 and a second component for treating regenerated cellulose fiber that contains a nonionic surfactant (B2) having an iodine value of 1 gl₂/100 g or more are adhered.
